# EUROPEAN PATENT SPECIFICATION

(11) **EP 1 000 800 B1**
(45) Date of publication and mention of the grant of the patent: **06.02.2008**
(21) Application number: 99122591.3
(22) Date of filing: 12.11.1999
(51) Int. Cl.: B60N 2/48

(54) **Headrest for motor vehicle seats**
Kopfstütze für Kraftfahrzeugsitze
Appui-tête pour sièges de véhicules automobiles

(30) Priority: 13.11.1998 IT TO980963
(43) Date of publication of application: 17.05.2000
(73) Proprietor: Gestind S.p.A., 10050 Bruzolo (TO) (IT)
(72) Inventor: De Filippo, Emilio, 10050 Bruzolo (IT)
(74) Representative: Eccetto, Mauro

(56) References cited:
- EP-A- 0 322 373
- EP-A- 0 853 021
- EP-A- 0 873 904
- US-A- 5 700 057

## Description

The present invention relates to a vehicle seat headrest, in particular for a motor vehicle.

For supporting the head of a vehicle driver or passenger, headrests are used comprising a supporting body having a supporting structure or frame; and a pair of rods for connecting the supporting body to the backrest of a vehicle seat. The rods normally have respective end portions connected to the backrest, and respective opposite end portions housed inside the structure and connected to the structure by normally click-on retaining devices for connecting the rods firmly to the supporting body.

Though widely used, headrests of the above type are fairly noisy and therefore create a good deal of discomfort to the user. This is mainly due to the various retaining devices normally failing to provide at the same time for effectively preventing axial slide of the rods with respect to the supporting body, and for taking up the axial clearances inevitably present as of assembly of the headrest, and which, as is known, increase when the supporting body is subjected by the user to thrust lengthwise of the rods.

It is an object of the present invention to provide a vehicle seat headrest designed to solve the aforementioned problems in a straightforward, low-cost manner, and which, in particular, is cheap and easy to produce.

According to the present invention, there is provided a vehicle seat headrest, in particular for a motor vehicle, the headrest comprising a supporting body having two seats with respective axes; two connecting rods, each comprising a respective end portion engaging a respective said seat in axially-sliding manner; and retaining means for keeping said end portions engaged in said seats; said retaining means comprising at least two mating surfaces which rest against each other; characterized in that said retaining means also comprise, for each said rod, first elastic axial forcing means carried by said rod or said supporting body to generate axial thrust to push said mating surfaces against each other.

A non-limiting embodiment of the invention will be described by way of example with reference to the accompanying drawings, in which:
Figure 1 shows a section of a preferred embodiment of a vehicle seat headrest in accordance with the present invention;
Figure 2 shows a larger-scale section along line II-II in Figure 1.

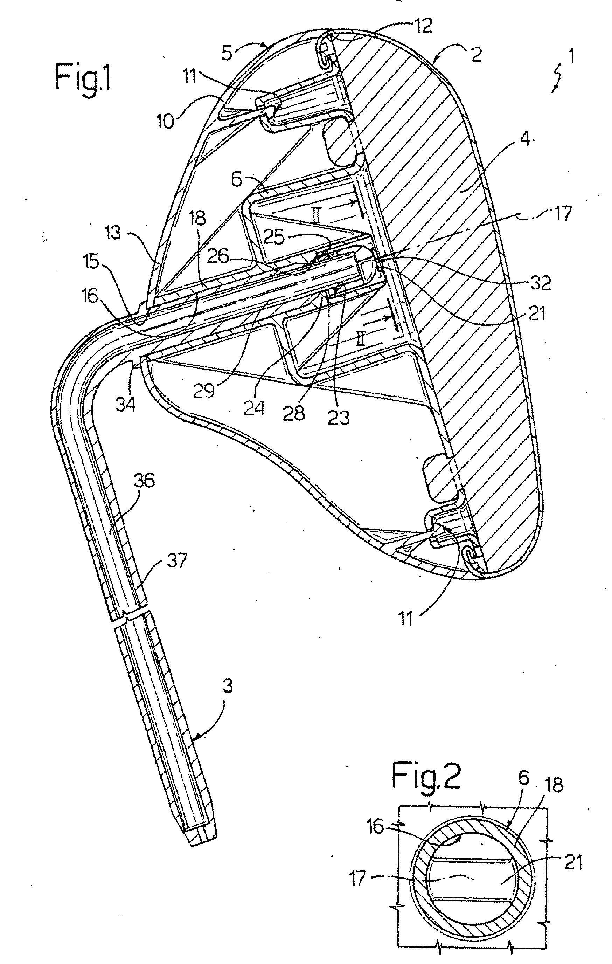

Number 1 in Figure 1 indicates a headrest for a vehicle seat (neither shown), the headrest comprising a supporting body 2 for supporting the head of a user; and two rods 3 (only one shown in Figure 1) for connecting supporting body 2 to the backrest (not shown) of the seat.

Supporting body 2 comprises a known front cushion 4; and a supporting structure 5 made of plastic material and in turn comprising a one-piece intermediate frame 6 for connecting cushion 4. Structure 5 also comprises an elastically deformable rear cover shell 10 connected integrally to frame 6 in known manner - preferably by means of a number of known click-on devices 11, only two of which are shown in Figure 1 - and having a front edge 12 forced against an outer peripheral portion of frame 6, and a rear portion 13 having two openings 15, each for the passage of a respective rod 3.

Each opening 15 defines the inlet of a respective elongated seat 16 having a respective axis 17 parallel to the axis 17 of the other seat 16, and extending, in use, in a substantially longitudinal direction substantially parallel to the direction of movement of the user's head. Each seat 16 is defined by a cylindrical lateral wall 18 coaxial with respective axis 17, and by an end wall, both forming part of frame 6.

As shown in Figure 1 and particularly in Figure 2, the end wall, in the particular example described, is defined by an elastic plate 21, which extends diametrically from one side to the other of cylindrical wall 18 to close only part of respective seat 16, and is arc-shaped with the convexity facing inwards of seat 16.

As shown in Figure 1, the inner surface 23 of cylindrical wall 18 carries, integrally, two teeth 24 facing and extending towards each other, and defined, on the side facing respective elastic plate 21, by respective flat surfaces 25 coplanar with each other and perpendicular to respective axis 17.

Each surface 25 rests against a respective mating surface 26, which is also perpendicular to axis 17 and axially defines a seat 28 for housing respective tooth 24. Seats 28 are formed on the outer periphery of an end portion 29 of respective rod 3 engaging respective seat 16, and are so positioned axially that, when surfaces 25 and 26 are positioned contacting each other, a front surface 32 of end portion 29 is forced against respective elastic plate 21.

As shown in Figure 1, end portion 29 of each rod 3 carries, integrally, a respective outer collar 34, which extends outside shell 10 in such an axial position that, when surfaces 25 and 26 are positioned contacting each other, collar 34 is forced against rear portion 13 of shell 10 to maintain portion 13 in an elastically deformed condition.

In the particular example described, each rod 3 is in the form of an upside down L, and comprises a metal core 36 covered with a layer 37 of plastic material, in which said seats 28 are formed, and of which collar 34 is made.

In actual use, elastic plates 21 and rear portion 13 of shell 10, being elastically deformed, form part of two different axial clearance take-up assemblies located parallel to each other and which exert axial force on rods 3, and in particular on end portion 29 of each rod 3, to keep surfaces 25 and 26 permanently in contact with each other, regardless of the initial dimensional tolerances of rods 3 and frame 6, and to restore contact between surfaces 25 and 26 following any action transmitted by the user's head.

The axial force to which frame 6 and end portions 29 of rods 3 are constantly subjected also provides for eliminating vibratory movements, crosswise to axes 17, of portions 29 inside respective seats 16.

As compared with known solutions, the construction characteristics of headrest 1 as described therefore provide for eliminating vibration and any associated noise, thus improving user comfort of both the headrest and respective seat.

Clearly, changes may be made to headrest 1 as described herein without, however, departing from the scope of the present invention.

In particular, the elastic forcing portions of headrest 1 may be formed and/or located differently from those described by way of example, providing a forcing component is generated parallel to axes 17 to force rods 3 against frame 6.

As regards the arrangement of the elastic portions, seats 16 may obviously be defined by respective end walls which need not necessarily be elastic; and end portions 29 of rods 3 may terminate with respective elastically deformable end portions, e.g. defined by the cover material and resting permanently on the respective end walls.

Finally, rear portion 13 of shell 10 or the whole of shell 10 may obviously be so formed as to be relatively rigid, so that axial forcing is effected solely by elastic plates 21.

## Claims

1. A vehicle seat headrest (1), in particular for a motor vehicle, the headrest comprising a supporting body (2) having two seats (16) with respective axes (17); two connecting rods (3), each comprising a respective end portion (29) engaging a respective said seat (16) in axially-sliding manner; and retaining means (24,28) (21,32) (10,34) for keeping said end portions (29) engaged in said seats (16); said retaining means (24,28) (21,32) (10,34) comprising at least two mating surfaces (25)(26) which rest against each other; **characterized in that** said retaining means (24,28)(21,32)(10,34) also comprise, for each said rod (3), first elastic axial forcing means (21)(10) carried by said rod (3) or said supporting body (2) to generate axial thrust to push said mating surfaces (25)(26) against each other.

2. A headrest as claimed in Claim 1, **characterized in that** said first elastic axial forcing means (21)(10) are carried by said supporting body (2).

3. A headrest as claimed in Claim 2, **characterized in that** said first elastic axial forcing means (21)(10) are integral with said supporting body (2).

4. A headrest as claimed in Claim 3, **characterized in that** said supporting body (2) comprises a supporting frame (6); said first elastic axial forcing means (21)(10) being formed in one piece with said supporting frame (6).

5. A headrest as claimed in Claim 4, **characterized in that** said supporting frame (6) comprises, for each said seat (16), at least one elastic portion (21) extending crosswise to the respective said axis (17); said elastic portions (21) forming at least part of said first elastic axial forcing means (21)(10).

6. A headrest as claimed in Claim 5, **characterized in that** each said elastic portion (21) extends resting against a front end surface (32) of the end portion (29) of the respective said rod (3).

7. A headrest as claimed in any one of Claims 4 to 6, **characterized in that** said retaining means (24,28)(21,32)(10,34) comprise second elastic axial forcing means (21)(10) distinct from said first elastic axial forcing means (21)(10) and parallel to the first elastic axial forcing means (21)(10) to exert axial thrust to push said mating surfaces (25)(26) against each other.

8. A headrest as claimed in Claim 7, **characterized in that** said supporting body (2) also comprises an elastic member (10) distinct from said supporting frame (6), connected to the supporting frame (6) itself, and resting against an axial shoulder (34) of each said rod (3); said elastic member (10) forming at least part of said second elastic axial forcing means (21)(10).

9. A headrest as claimed in Claim 8, **characterized in that** said elastic member (10) surrounds at least partly said supporting frame (6).

10. A headrest as claimed in any one of the foregoing Claims, **characterized in that** said retaining means (24,28) (21,32) (10,34) comprise click-on connecting means (24,28) for each said rod (3); and **in that** the relative said mating surfaces (25)(26) form part of said click-on connecting means (24,28).

11. A headrest as claimed in Claim 9, **characterized in that** said click-on connecting means (24,28) comprise at least one tooth (24) carried by said supporting body (2) and extending inside the relative said seat (16); and at least one further seat (28) formed in the relative said end portion (29) and engaged by said tooth (24); said tooth (24) and the relative said further seat (28) each being defined by a respective said mating surface (25)(26).

## Patentansprüche

1. Fahrzeugsitzkopfstütze (1), insbesondere für ein Kraftfahrzeug, wobei die Kopfstütze aufweist: einen Stützkörper (2) mit zwei Aufnahmen (16) mit entsprechenden Achsen (17), zwei Verbindungsstangen (3), die jeweils einen entsprechenden Endabschnitt (29) aufweisen, der in eine entsprechende Aufnahme (16) axial gleitend eingreift, und Haltemittel (24, 28) (21, 32) (10, 34), um die Endabschnitte (29) in Eingriff mit den Aufnahmen (16) zu halten, wobei die Haltemittel (24, 28) (21, 32) (10, 34) mindestens zwei zusammenpassende Oberflächen (25) (26) aufweisen, die aneinander anliegen, **dadurch gekennzeichnet, dass** die Haltemittel (24, 28) (21, 32) (10, 34) ebenfalls für jede genannte Stange (3) erste elastische axiale Druckmittel (21) (10) aufweisen, die von der Stange (3) oder dem Stützkörper (2) getragen sind, um einen Axialschub zu erzeugen, um die zusammenpassenden Oberflächen (25) (26) gegeneinander zu drücken.

2. Kopfstütze nach Anspruch 1, **dadurch gekennzeichnet, dass** die ersten elastischen axialen Druckmittel (21) (10) von dem Stützkörper (2) getragen sind.

3. Kopfstütze nach Anspruch 2, **dadurch gekennzeichnet, dass** die ersten elastischen axialen Druckmittel (21) (10) mit fest in dem Stützkörper (2) eingebaut sind.

4. Kopfstütze nach Anspruch 3, **dadurch gekennzeichnet, dass** der Stützkörper (2) einen Stützrahmen (6) aufweist, wobei die ersten elastischen axialen Druckmittel (21) (10) einstückig mit dem Stützrahmen (6) ausgebildet sind.

5. Kopfstütze nach Anspruch 4, **dadurch gekennzeichnet, dass** der Stützrahmen (6) für jede Aufnahme (16) mindestens einen elastischen Abschnitt (21) aufweist, der sich quer zu der entsprechenden Achse (17) erstreckt, wobei die elastischen Abschnitte (21) zumindest einen Teil der ersten elastischen axialen Druckmittel (21) (10) bilden.

6. Kopfstütze nach Anspruch 5, **dadurch gekennzeichnet, dass** jeder elastische Abschnitt (21) sich derart erstreckt, dass er an einer vorderen Endfläche (32) des Endabschnitts (29) der entsprechenden Stange (3) anliegt.

7. Kopfstütze nach einem der Ansprüche 4 bis 6, **dadurch gekennzeichnet, dass** die Haltemittel (24, 28) (21, 32) (10, 34) zweite elastische axiale Druckmittel (21) (10) aufweisen, die sich von den ersten elastischen axialen Druckmitteln (21) (10) unterscheiden und parallel zu den ersten elastischen axialen Druckmitteln (21) (10) sind, um einen Axialschub auszuüben, um die zusammenpassenden Oberflächen (25) (26) gegeneinander zu drücken.

8. Kopfstütze nach Anspruch 7, **dadurch gekennzeichnet, dass** der Stützkörper (2) auch ein elastisches Element (10) aufweist, das sich von dem Stützrahmen (6) unterscheidet, mit dem Stützrahmen (6) selbst verbunden ist und an einer axialen Schulter (34) jeder Stange (3) anliegt, wobei das elastische Element (10) zumindest einen Teil der zweiten elastischen axialen Druckmittel (21) (10) bildet.

9. Kopfstütze nach Anspruch 8, **dadurch gekennzeichnet, dass** das elastische Element (10) zumindest teilweise den Stützrahmen (6) umgibt.

10. Kopfstütze nach einem der vorhergehenden Ansprüche, **dadurch gekennzeichnet, dass** die Haltemittel (24, 28) (21, 32) (10, 34) einrastbare Verbindungsmittel (24, 28) für jede Stange (3) aufweisen, und dass die jeweiligen zusammenpassenden Oberflächen (25) (26) Teil der einrastbaren Verbindungsmittel (24, 28) bilden.

11. Kopfstütze nach Anspruch 9, **dadurch gekennzeichnet, dass** die einrastbaren Verbindungsmittel (24, 28) mindestens einen Zahn (24), der von dem Stützkörper (2) getragen ist und sich in die jeweilige Aufnahme (16) erstreckt, und mindestens eine weitere Aufnahme (28) aufweisen, die in dem jeweiligen Endabschnitt (29) gebildet und in Eingriff mit dem Zahn (24) ist, wobei der Zahn (24) und die jeweilige weitere Aufnahme (28) jeweils durch eine entsprechende zusammenpassende Oberfläche (25) (26) definiert sind.

## Revendications

1. Appuie-tête pour siège de véhicule (1), en particulier de véhicule automobile, l'appuie-tête comprenant un corps de support (2) ayant deux sièges (16) avec des axes respectifs (17), deux tiges de liaison (3) comprenant chacune une partie d'extrémité respective (29) venant en prise d'un dudit siège respectif (16) selon un coulissement axial et des moyens de retenue (24, 28) (21, 32), (10, 34) pour maintenir lesdites parties d'extrémité (29) en prise dans lesdits sièges (16), ledit moyen de retenue (24, 28) (21, 32) (10, 34) comprenant au moins deux surfaces d'adaptation (25) (26) qui reposent l'une contre l'autre, **caractérisé en ce que** lesdits moyens de retenue (24, 28) (21, 32) (10, 34) comportent aussi pour chaque dite tige (3) des premiers moyens de sollicitation axiale élastiques (21) (10) supportés par ladite tige (3) ou ledit corps de support (2) pour générer une poussée axiale afin de pousser lesdites surfaces d'adaptation (25) (26) l'une contre l'autre.

2. Appuie-tête selon la revendication 1, **caractérisé en ce que** lesdits premiers moyens de sollicitation axiale élastiques (21) (10) sont supportés par ledit corps de support (2).

3. Appuie-tête selon la revendication 2, **caractérisé en ce que** lesdits premiers moyens de sollicitation axiale élastiques (21) (10) sont solidaires dudit corps de support (2).

4. Appuie-tête selon la revendication 3, **caractérisé en ce que** ledit corps de support (2) comprend un châssis de support (6), lesdits premiers moyens de sollicitation axiale élastiques (21) (10) étant formés d'une seule pièce avec ledit châssis de support (6).

5. Appuie-tête selon la revendication 4, **caractérisé en ce que** ledit châssis de support (6) comprend pour chaque dit siège (16) au moins une partie élastique (21) s'étendant transversalement audit axe respectif (17), lesdites parties élastiques (21) formant au moins une partie desdits premiers moyens de sollicitation axiale élastiques (21) (10).

6. Appuie-tête selon la revendication 5, **caractérisé en ce que** chaque dite partie élastique (21) s'étend au repos contre une surface d'extrémité avant (32) de la partie d'extrémité (29) de ladite tige respective (3).

7. Appuie-tête selon l'une quelconque des revendications 4 à 6, **caractérisé en ce que** lesdits moyens de retenue (24, 28) (21, 32), (10, 34) comportent des deuxièmes moyens de sollicitation axiale élastiques (21) (10) distincts desdits premiers moyens de sollicitation axiale élastiques (21) (10) et parallèles aux premiers moyens de sollicitation axiale élastiques (21) (10) pour exercer une poussée axiale pour pousser lesdites surfaces d'adaptation (25) (26) l'une contre l'autre.

8. Appuie-tête selon la revendication 7, **caractérisé en ce que** ledit corps de support (2) comporte également un élément élastique (10) distinct dudit châssis de support (6) relié au châssis de support (6) lui-même et reposant contre un épaulement axial (34) de chaque dite tige (3), ledit élément élastique (10) formant au moins une partie desdits deuxièmes moyens de sollicitation axiale élastiques (21) (10).

9. Appuie-tête selon la revendication 8, **caractérisé en ce que** ledit élément élastique (10) entoure au moins partiellement ledit châssis de support (6).

10. Appuie-tête selon l'une quelconque des revendications précédentes, **caractérisé en ce que** lesdits moyens de retenue (24, 28) (21, 32), (10, 34) comportent un moyen de liaison à déclic (24, 28) pour chaque dite tige (3) et **en ce que** lesdites surfaces d'adaptation relatives (25) (26) forment une partie dudit moyen de liaison à déclic (24, 28).

11. Appuie-tête selon la revendication 9, **caractérisé en ce que** lesdits moyens de liaison à déclic (24, 28) comportent au moins une dent (24) supportée par ledit corps de support (2) et s'étendant à l'intérieur dudit siège relatif (16) et au moins un autre siège (28) formé dans ladite partie d'extrémité relative (29) et en prise par ladite dent (24), ladite dent (24) et ledit autre siège relatif (28) étant chacun défini par une desdites surfaces d'adaptation respectives00 (25) (26).
